# FASCICULE DE BREVET EUROPEEN

(11) **EP 3 230 101 B1**
(45) Date de publication et mention de la délivrance du brevet: **29.04.2020**
(21) Numéro de dépôt: 15818007.5
(22) Date de dépôt: 11.12.2015
(51) Int. Cl.: B60J 10/265, B60J 10/36, B60R 13/04, B60J 10/78

(54) **VITRAGE A JOINT PROFILE, ENJOLIVEUR ET NOYAU ET PROCEDE DE FABRICATION DU VITRAGE**
FENSTER MIT DICHTUNGSPROFIL, KAPPE UND KERN, SOWIE VERFAHREN ZUR HERSTELLUNG DIESES FENSTERS
WINDOW HAVING A PROFILED JOINT, CAP AND CORE, AND METHOD FOR MANUFACTURING SAID WINDOW

(30) Priorité: 12.12.2014 FR 1462330
(43) Date de publication de la demande: 18.10.2017
(73) Titulaire: Saint-Gobain Glass France, 92400 Courbevoie (FR)
(72) Inventeur: GONNET, Romain, 60610 La Croix Saint Ouen (FR)
(74) Mandataire: Saint-Gobain Recherche
(86) Numéro de dépôt international: PCT/FR2015/053447
(87) Numéro de publication internationale: WO 2016/092231

(56) Documents cités:
- DE-U1-202010 013 082
- FR-A- 1 353 442
- FR-A1- 2 932 127
- GB-A- 667 945
- GB-A- 692 057
- US-A- 3 766 697

## Description

La présente invention concerne un vitrage de véhicule comprenant un élément vitré, au moins une portion de joint profilé et au moins un enjoliveur présentant une forme allongée qui s'étend selon un bord dudit élément vitré et présentant une face extérieure visible depuis l'extérieur du véhicule et une face intérieure située à l'opposé de ladite face extérieure.

Cet enjoliveur peut présenter, par exemple, en section transversale, une forme générale avec une base et au moins une aile s'étendant à partir de ladite base, ladite base étant située, lorsque l'enjoliveur est installé sur le vitrage, au-dessus d'une face extérieure de ladite portion de joint profilé et ledit enjoliveur étant fixé à ladite portion de joint profilé sans élément de fixation intermédiaire.

La présente invention concerne également le procédé de fabrication du vitrage correspondant.

Dans tout le présent document, l'expression « enjoliveur » désigne un accessoire du vitrage, en particulier un accessoire de forme allongée ; elle ne désigne pas un élément de carrosserie de véhicule. Un tel enjoliveur est utilisé pour distinguer visuellement le bord du vitrage, vu de l'extérieur ; il présente souvent une apparence métallique brillante (« chromée ») ou une apparence colorée.

Il est connu d'utiliser des enjoliveurs constitués de profilés en forme de U qui viennent se fixer par clipage sur des clips intermédiaires qui sont eux-mêmes attachés au cordon profilé qui est réalisé par exemple en un polymère souple et qui est présent en périphérie du vitrage.

Il est connu par ailleurs, notamment des documents brevet GB 667945, GB 692057 et US 3766697 de prévoir un noyau préfabriqué puis positionné sous un enjoliveur, ce noyau étant ensuite inséré dans une nervure prévue à cet effet dans un cordon profilé qui a été préfabriqué indépendamment du noyau auparavant, avant cette insertion.

Il est connu par ailleurs, notamment de certaines variantes présentées dans la demande de brevet européen N° EP 1 944 182, de fixer directement un enjoliveur à un cordon profilé, sans clip intermédiaire.

Un autre vitrage de véhicule est connu de DE202010013082U.

Ce document divulgue qu'au moins un élément de rétention, notamment en forme de flèche, peut être introduit dans un trou ménagé en face extérieure de la portion de joint, ce trou pouvant déboucher sur la face intérieure de la portion de joint ; toutefois, cet élément de rétention se situe, dans sa position finale, à l'intérieur de la portion de joint : il ne traverse pas complètement la portion de joint et ne vient pas au contact de la face intérieure de la portion de joint.

Cette solution présente l'avantage de pouvoir être adoptée lorsque l'espace disponible entre la périphérie du vitrage et la carrosserie adjacente est faible.

Toutefois, la fixation de l'enjoliveur par cet élément de rétention n'est pas suffisamment fiable : même si plusieurs éléments de rétention sont prévus, l'enjoliveur peut être facilement retiré car il suffit d'appliquer un mouvement dans la même direction mais dans le sens contraire du mouvement d'introduction des éléments de rétention dans les trous.

La présente invention a pour but de remédier aux inconvénients de la technique antérieure en proposant un enjoliveur qui peut être fixé d'une manière amovible de manière simple, rapide et fiable à une portion de joint et en particulier lorsque l'espace disponible entre la périphérie du vitrage et la carrosserie adjacente est faible.

Un but particulier de l'invention est de permettre la présence d'un enjoliveur lorsque la portion de joint profilé qui porte l'enjoliveur est relativement haute (de l'ordre de 3 à 10 mm au-dessus de l'élément vitré), tout en permettant que la quantité de matière de cette portion de joint profilé soit réduite afin de diminuer les risques liés à la fabrication d'une portion de joint profilé épaisse.

En effet, notamment lorsqu'une portion de joint profilé est fabriquée par injection de matière dans un moule contenant l'élément vitré, il est compliqué de gérer une injection correcte de la matière sur des épaisseurs élevée et dans des volumes correspondant pleins.

La présente invention repose ainsi sur une solution selon laquelle une pièce intermédiaire est utilisée pour fixer l'enjoliveur au vitrage, cette pièce intermédiaire permettant de diminuer la quantité de matière nécessaire pour la portion de joint profilé. En outre, cette pièce intermédiaire participe au maintien de l'enjoliveur, en particulier pendant le moulage si le joint profilé est fabriqué par moulage sur l'élément vitré.

La présente invention se rapporte ainsi à un vitrage de véhicule selon la revendication 1. Ce vitrage comprend un élément vitré, au moins une portion de joint profilé, au moins un enjoliveur présentant une forme allongée qui s'étend selon un bord dudit élément vitré et présentant une face extérieure visible depuis l'extérieur du véhicule et une face intérieure située à l'opposé de ladite face extérieure remarquable en ce qu'un noyau, présentant une forme allongée et présentant en coupe transversale une tête et un pied, est situé sous ledit enjoliveur avec au moins une partie de ladite tête au contact de ladite face intérieure de l'enjoliveur et ledit pied qui fait saillie sous ledit enjoliveur avec au moins une partie dudit pied qui n'est pas au contact avec ladite face intérieure de l'enjoliveur, et en ce que ladite portion de joint profilé, vue en coupe transversale, est en contact avec ledit élément vitré, ledit pied et une partie de ladite face extérieure de l'enjoliveur.

Ladite portion de joint profilé est fabriquée par moulage d'une matière plastique sur ledit élément vitré.

Avantageusement le moulage de la portion de joint profilé sur ledit élément vitré est un moulage sur le pied dudit noyau qui est préfabriqué et qui est pourvu de l'enjoliveur.

Le fait que la portion de joint profilé est fabriquée par moulage d'une matière plastique sur l'élément vitré complexifie beaucoup la fabrication du vitrage par rapport à une solution où la portion de joint profilé est préfabriquée indépendamment de l'élément vitré ou une solution où la portion de joint profilé est fabriquée par extrusion ou moulage sur l'élément vitré ; toutefois, une telle fabrication engendre une interaction chimique à l'interface entre le noyau, préfabriqué, et la portion de joint profilé lors de son moulage sur l'élément vitré.

Cette interaction chimique provoque, d'une manière surprenante, un phénomène d'adhérence entre les deux pièces, le noyau et le joint profilé, qui n'est pas complètement compris et cette adhérence participe activement à améliorer la tenue mécanique dans le temps du vitrage ainsi pourvu du joint profilé, du noyau et de l'enjoliveur.

L'analyse du vitrage selon l'invention terminé montre cette interaction chimique : il est impossible de séparer le noyau du cordon profilé par traction manuelle sur le noyau.

De préférence, ladite tête du noyau est recouverte de l'enjoliveur ; la totalité de ladite tête est alors au contact de ladite face intérieure de l'enjoliveur ; ladite portion de joint profilé n'est ainsi pas en contact avec ladite face intérieure de l'enjoliveur.

Ledit enjoliveur présente, de préférence, en coupe transversale, une forme avec une base centrale et au moins une aile qui s'étend à partir de ladite base selon un angle non nul et non plat.

Ladite portion de joint profilé est, de préférence, en contact avec une partie des ailes de l'enjoliveur mais n'est pas en contact avec la base de l'enjoliveur.

Ainsi, au moins la moitié, voire jusqu'à la totalité de la face extérieure d'une aile, ou de chaque aile, est recouverte de la portion de joint profilé de telle sorte que ce recouvrement participe au maintien de l'ensemble enjoliveur/noyau par la portion de joint profilé.

De préférence pour que l'ensemble enjoliveur/noyau soit bien maintenu, ledit noyau adhère soit directement, soit par l'intermédiaire d'une colle, avec ladite portion de joint profilé et/ou ledit pied présente, sur au moins une partie d'un contour, au moins une rainure longitudinale, voire plusieurs rainures longitudinales formant ainsi un contour en dent de scie.

Ledit pied présente, vu en coupe transversale, une section qui est plus large à proximité de la tête et qui est plus restreinte à distance de la tête.

De préférence, ladite portion de joint profilé présente, en face extérieure, un creux de forme complémentaire d'un pourtour dudit pied.

Dans une variante, ledit enjoliveur comporte au moins une patte qui est située sur un bord longitudinal dudit enjoliveur et qui est rabattue au contact dudit pied. Cette patte, ou chaque patte, est de préférence ajourée.

Dans une variante supplémentaire, ledit enjoliveur comporte au moins une patte opposée qui est située sur un bord longitudinal opposé dudit enjoliveur, c'est-à-dire un bord longitudinal opposé transversalement au bord qui comporte la première patte, et qui est rabattue au contact dudit pied. Cette patte, ou chaque patte, est de préférence ajourée. La distance longitudinale (le décalage longitudinal) entre deux pattes qui ne sont disposées sur le même bord longitudinal est de préférence entre 40 et 150 mm.

Ledit noyau présente, de préférence, une longueur égale à la longueur dudit enjoliveur.

Dans une version préférée de l'invention, ladite portion de joint profilé, vue en coupe transversale, est en contact avec une face extérieure, une face intérieure et un chant dudit élément vitré et ledit enjoliveur est situé au moins en partie, au-dessus de ladite face extérieure dudit élément vitré.

De préférence par ailleurs, ledit noyau est en matière différente d'une part de l'enjoliveur et d'autre part de ladite portion de joint profilé ; ledit noyau est, de préférence, en matière plastique.

Ledit noyau est, de préférence unique pour l'enjoliveur, afin de faciliter le moulage ; Le profil ou contour du noyau peut-être constant sur toute sa longueur également afin de faciliter le moulage.

Pour augmenter encore le maintien de l'ensemble enjoliveur/noyau par la portion de joint profilé, il est possible que ledit pied comporte au moins un trou transversal pour le passage de la matière de ladite portion de joint profilé.

Ledit noyau est de préférence plein. Il peut éventuellement est creux en son centre.

De préférence en outre, tout le pourtour dudit pied est au contact de la matière dudit cordon profilé.

La présente invention se rapporte aussi à un procédé de fabrication d'un vitrage suivant l'invention, ledit vitrage comprenant un élément vitré, au moins une portion de joint profilé, au moins un enjoliveur présentant une forme allongée qui s'étend selon un bord dudit élément vitré et présentant une face extérieure visible depuis l'extérieur du véhicule et une face intérieure située à l'opposé de ladite face extérieure, remarquable en ce qu'un noyau, présentant une forme allongée et présentant en coupe transversale une tête et un pied, est positionné sous ledit enjoliveur avec au moins une partie de ladite tête au contact de ladite face intérieure de l'enjoliveur et ledit pied qui fait saillie sous ledit enjoliveur avec au moins une partie dudit pied qui n'est pas au contact avec ladite face intérieure de l'enjoliveur, puis en ce que ladite portion de joint profilé est fabriquée par moulage d'une matière plastique sur ledit élément vitré, sur ledit pied et sur une partie de ladite face extérieure de l'enjoliveur avec ladite portion de joint profilé, vue en coupe transversale, qui est en contact avec ledit élément vitré, ledit pied et une partie de ladite face extérieure de l'enjoliveur.

De préférence, ledit noyau adhère soit directement, soit par l'intermédiaire d'une colle, avec ladite matière plastique de ladite portion de joint profilé et/ou ledit pied présente, sur au moins une partie d'un contour, au moins une rainure longitudinale. Cette adhésion s'opère, de préférence avant le moulage de ladite portion de joint profilé.

Ledit enjoliveur peut comporter au moins une patte qui est située sur un bord longitudinal dudit enjoliveur et qui est alors rabattue au contact dudit pied avant le moulage de ladite portion de joint profilé.

Avantageusement, la présente invention permet de fabriquer un vitrage à enjoliveur et portion de joint profilé dont la portion de joint profilé présente une hauteur importante mais un volume limité par la présence du noyau qui sert par ailleurs à fixer l'enjoliveur.

Cela permet ainsi de limiter le risque d'apparition de défaut d'aspect (du type ridules ou autre) en face extérieure de la portion de joint profilé, en particulier lorsque cette portion de joint profilé est fabriquée par injection.

On décrira ci-après, à titre d'exemples non limitatifs, plusieurs formes d'exécution de la présente invention, en référence aux dessins annexés sur lequel :
- la figure 1 illustre une vue en coupe transversale d'un vitrage selon l'invention ;
- la figure 2 est une vue partielle en perspective de l'enjoliveur et du noyau du vitrage de la figure 1 avant rabat d'une patte de l'enjoliveur ; et
- la figure 3 est une vue similaire à la figure 2, après rabat de la patte de l'enjoliveur.

Dans ces figures, les proportions entre les différents éléments sont respectées sur chaque figure mais les éléments en arrière-plan ne sont en général pas représentés, afin de faciliter leur lecture.

La présente invention se rapporte à un vitrage 1 de véhicule, comprenant un élément vitré 2, au moins une portion de joint profilé 3 fixée à l'élément vitré, au moins une pièce rapportée, telle qu'un enjoliveur 4 fixé à ladite portion de joint profilé 3.

Dans le cadre de l'invention, l'enjoliveur 4 se trouve fixé à la portion de joint profilé par une pièce de fixation intermédiaire décrite en détail plus loin.

Le vitrage 1 selon l'invention qui est illustré est un vitrage latéral arrière fixe d'une automobile (custode arrière). Il comporte un élément vitré 2 qui est muni d'une portion d'un cordon profilé 3 en un matériau polymère souple qui fait tout le tour de l'élément vitré 2.

Le vitrage 1, qui comporte éventuellement un (ou des) accessoire(s) et notamment un (ou des) accessoire(s) de fixation du vitrage, est destiné à fermer une baie réalisant une séparation entre un espace intérieur du véhicule et un espace extérieur au véhicule. L'élément vitré 2 présente ainsi une face extérieure 22 destinée à être tournée vers l'espace extérieur, une face intérieure 23 destinée à être tournée vers l'espace intérieur, ainsi qu'un chant 21 périphérique.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation (non illustrée).

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Sur les figures, l'élément vitré 2 est un vitrage monolithique. Le vitrage illustré est un vitrage fixe, mais la présente invention peut aussi s'appliquer à un vitrage mobile.

La portion de joint profilé 3 présente ainsi une face extérieure 32 qui est destinée à être orientée vers l'extérieur du véhicule, ainsi qu'une face intérieure 33 qui est destinée à être orientée vers l'intérieur du véhicule.

Le matériau polymère constitutif du cordon profilé 3 peut être un thermoplastique (PVC, TPE, ...), un polyuréthanne ou encore un caoutchouc synthétique du type EPDM ou toute autre matière adéquate.

Le cordon profilé 3 est, de préférence, fabriqué par mise en œuvre d'un procédé de fabrication appelé « encapsulation » car il comporte une étape de moulage du cordon profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité de moulage qui est remplie de la matière constitutive du cordon profilé pendant l'étape de moulage de ce cordon.

Le cordon profilé 3 est, de préférence, disposé sur toute la périphérie du vitrage 1 mais ce cordon profilé pourrait tout à fait n'être positionné que sur une partie de la périphérie du vitrage ou sur une partie quelconque du vitrage.

Sur les figures, l'enjoliveur 4 recouvre ainsi une portion de la face extérieure 32 du joint profilé.

C'est pour améliorer l'aspect esthétique du vitrage, qu'une partie du cordon profilé 3 visible de l'extérieur du véhicule est masquée par l'enjoliveur 4.

L'enjoliveur 4 présente une forme allongée qui s'étend selon un bord dudit élément vitré 2 et présentant une face extérieure 42 visible depuis l'extérieur du véhicule, une face intérieure 43 située à l'opposé de ladite face extérieure 42, ainsi qu'un chant 44 situé entre ces deux faces.

L'enjoliveur est préfabriqué : il a été fabriqué, et éventuellement mis en forme, préalablement à sa fixation au vitrage. Il peut être en aluminium, alliage d'aluminium, acier et notamment acier inoxydable.

Le matériau qui le constitue présente de préférence un module d'élasticité compris entre 60.10³ MPa et 250 10³ MPa afin de permettre d'appliquer manuellement une déformation plastique sur la ou les pattes.

L'enjoliveur présente une forme complexe (non plane) : il présente en coupe transversale une forme avec une base 40 centrale et au moins une aile 41, 41' qui s'étend à partir de ladite base. Cette forme est positionnée à l'envers avec la base située au-dessus, ou précisément ici sur, la face extérieure 32 de ladite portion de joint profilé 3.

Selon l'invention, une pièce intermédiaire est utilisée ; l'enjoliveur 4 est fixé sur cette pièce intermédiaire et cette pièce intermédiaire est elle-même fixée au cordon profilé 3.

Cette pièce intermédiaire est un noyau 5 présentant une forme allongée et présentant en coupe transversale une tête 50 et un pied 51. Ce noyau 5 est situé sous l'enjoliveur 4 avec au moins une partie de ladite tête 50 au contact de ladite face intérieure 43 de l'enjoliveur 4 et ledit pied 51 qui fait saillie sous ledit enjoliveur 4 avec au moins une partie dudit pied 51 qui n'est pas au contact avec ladite face intérieure 43 de l'enjoliveur 4.

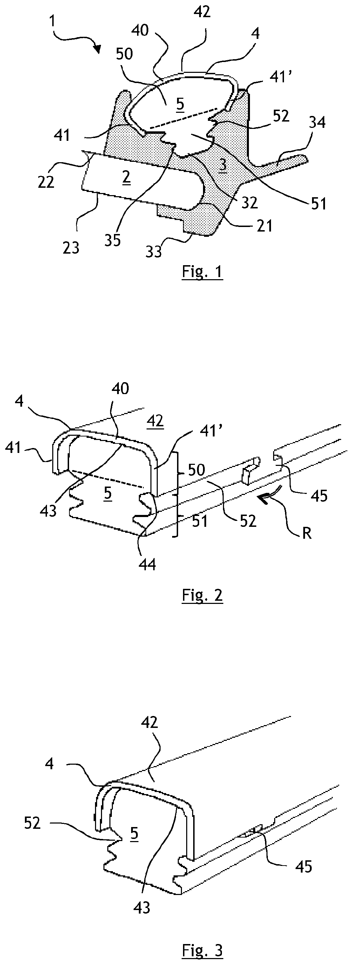

Le trait en pointillés visible au milieu du noyau 5 en figures 1 et 2 illustre la séparation entre la tête 50 et le pied 51.

Comme visible en figures 1 à 3, de préférence, la tête 50 du noyau est complètement recouverte de l'enjoliveur 4 ; ladite portion de joint profilé n'est donc pas en contact avec la tête 51.

Le noyau 5 est plein ; il peut être par exemple en polypropylène (PP) et le joint profilé 3 peut être par exemple en élastomère thermoplastique (TPE).

Par ailleurs, la portion de joint profilé 3, vue en coupe transversale, en n'importe quel point selon la longueur du noyau, est en contact avec ledit élément vitré 2, ledit pied 51 et une partie seulement de ladite face extérieure 42 de l'enjoliveur 4.

Comme visible en figure 1, la portion de joint profilé 3 est en contact avec une partie des ailes 41, 41' de l'enjoliveur 4 mais n'est pas en contact avec la base 40 de l'enjoliveur.

Ainsi, au moins la moitié, voire jusqu'à la totalité de la face extérieure des ailes est recouverte de la portion de joint profilé 3 de telle sorte que ce recouvrement participe au maintien de l'ensemble enjoliveur/noyau par la portion de joint profilé.

Le noyau et l'enjoliveur forment tous les deux un ensemble de deux pièces distinctes fixées l'une à l'autre. Cette fixation est mécanique voire en outre chimique.

Il est ainsi possible que l'enjoliveur 4 soit collé sur la tête 50 du noyau afin de réaliser une fixation chimique.

Les figures 2 et 3 illustrent la fixation mécanique : l'enjoliveur comporte au moins une patte 45, qui peut éventuellement être ajourée afin que la matière du joint profilé puisse pénétrer dans ce jour et augmenter encore le maintien de l'ensemble noyau/enjoliveur par le cordon profilé.

La patte 45 est située sur un bord longitudinal de l'enjoliveur 4 et plus précisément elle s'étend dans la continuité du chant 44 de l'enjoliveur 4, comme visible plus précisément en figure 2. La flèche R illustre le mouvement de rabat de la patte 45.

La figure 3 illustre cette patte 45 après qu'elle ait été rabattue au contact du pied 51, et plus précisément ici, après qu'elle ait été rabattue dans une rainure 52.

Il est possible de prévoir que l'enjoliveur 4 comporte plusieurs pattes qui sont toutes situées sur un même bord longitudinal de l'enjoliveur 4 et qui sont rabattues au contact du pied 51.

Il est possible que l'enjoliveur 4 comporte en outre au moins une patte opposée qui est située sur un bord longitudinal opposé et qui est rabattue au contact dudit pied 51.

Selon l'invention, l'ensemble noyau/enjoliveur est maintenu par le cordon profilé. Ce maintien est un maintien mécanique et/ou chimique.

Pour un maintien chimique, le noyau 5 adhère, soit par l'intermédiaire d'une colle, soit directement, avec la portion de joint profilé 3, en fonction de la nature de la matière plastique de la portion de joint profilé 3.

Pour un maintien mécanique, ledit pied 51 présente, comme visible en figures 1 à 3, sur au moins une partie d'un contour, au moins une rainure longitudinale 52, voire plusieurs rainures longitudinales qui forment ainsi un contour en dent de scie.

Ici, le contour n'est que partiellement en dent de scie : il n'est en dent de scie que sur les côté latéraux gauche et droit (lorsqu'observé en coupe transversale comme en figure 1) mais pas sur sa partie inférieure, afin que la quantité portion de joint profilé soit suffisante entre le noyau et l'élément vitré pour maintenir correctement l'ensemble noyau/enjoliveur.

La portion de joint profilé 3 présente, en face extérieure 32, un creux 35 de forme complémentaire d'un pourtour dudit pied 51.

Pour augmenter le maintien de l'ensemble noyau/enjoliveur, le pied 51 présente, vu en coupe transversale, une section qui est plus large à proximité de la tête 50 et qui est plus restreinte à distance de la tête 50.

Le noyau 5 présente, de préférence, une longueur égale à la longueur de l'enjoliveur 4.

Il est donc important que la tête 50 présente une longueur égale à la longueur de l'enjoliveur 4 ; il est possible que le pied 51 soit plus court que l'enjoliveur 4 mais cela diminue le maintien du noyau par la portion de joint profilé ou que le pied 51 soit plus long que l'enjoliveur 4 et cela augmente le maintien du noyau par la portion de joint profilé.

Dans l'exemple de réalisation illustré en figure 1 la portion de joint profilé 3, vue en coupe transversale, est en contact avec la face extérieure 22, la face intérieure 23 et le chant 21 de l'élément vitré 2 et l'enjoliveur 4 est pour l'essentiel, au-dessus de ladite face extérieure 22 dudit élément vitré 2 ; la portion de joint profilé 3 présente une épaisseur relativement grande au-dessus de la face extérieure 22 mais la quantité de matière nécessaire à la réalisation de cette portion est réduite grâce au volume occupé par le noyau, ce qui facilite la fabrication du joint profilé 3, en particulier lorsqu'il est fabriqué par moulage par injection. En effet, il est toujours compliqué de réaliser une injection de moulage dans un grand volume.

Lorsque le joint profilé 3 est fabriqué par injection, il faut d'abord assembler le noyau avec l'enjoliveur de telle sorte qu'au moins une partie de la tête 50 soit au contact de ladite face intérieure 43 de l'enjoliveur 4 et que le pied 51 fasse saillie sous l'enjoliveur 4 avec au moins une partie du pied 51 qui n'est pas au contact avec ladite face intérieure 43 de l'enjoliveur 4, puis l'ensemble noyau/enjoliveur est positionné dans le moule d'injection de la portion de joint profilé et enfin cette portion de joint profilé 3 est fabriquée par moulage d'une matière plastique sur ledit élément vitré 2.

Par ce moulage, la portion de joint profilé 3 est moulée sur ledit pied 51 et sur une partie de ladite face extérieure 42 de l'enjoliveur 4 avec ladite portion de joint profilé 3, vue en coupe transversale, qui est en contact avec ledit élément vitré 2, ledit pied 51 et une partie de ladite face extérieure 42 de l'enjoliveur 4.

Pour permettre le moulage, l'ensemble noyau/enjoliveur est maintenu dans la cavité de moulage par des moyens connus en soi de type doigt (s) de maintien ou aimant (s) si l'enjoliveur est métallique.

## Revendications

1. Vitrage (1) de véhicule, ledit vitrage comprenant un élément vitré (2), au moins une portion de joint profilé (3), au moins un enjoliveur (4) présentant une forme allongée qui s'étend selon un bord dudit élément vitré (2) et présentant une face extérieure (42) visible depuis l'extérieur du véhicule et une face intérieure (43) située à l'opposé de ladite face extérieure (42), ainsi qu'un noyau (5), présentant une forme allongée et présentant en coupe transversale une tête (50) et un pied (51), ledit noyau (5) étant situé sous ledit enjoliveur (4) avec au moins une partie de ladite tête (50) au contact de ladite face intérieure (43) de l'enjoliveur (4) et ledit pied (51) qui fait saillie sous ledit enjoliveur (4) avec au moins une partie dudit pied (51) qui n'est pas au contact avec ladite face intérieure (43) de l'enjoliveur (4), ladite portion de joint profilé (3), vue en coupe transversale, étant en contact avec ledit élément vitré (2), ledit pied (51) et une partie de ladite face extérieure (42) de l'enjoliveur (4), **caractérisé en ce que** ladite portion de joint profilé (3) est fabriquée par moulage d'une matière plastique sur ledit élément vitré (2), sur ledit pied (51) et sur une partie de ladite face extérieure (42) de l'enjoliveur (4).

2. Vitrage (1) suivant la revendication 1, **caractérisé en ce que** ledit noyau (5) adhère soit directement, soit par l'intermédiaire d'une colle, avec ladite portion de joint profilé (3) et/ou ledit pied (51) présente, sur au moins une partie d'un contour, au moins une rainure longitudinale (52).

3. Vitrage (1) suivant la revendication 1 ou 2, **caractérisé en ce que** ladite portion de joint profilé (3) présente, en face extérieure (32), un creux (35) de forme complémentaire d'un pourtour dudit pied (51).

4. Vitrage (1) suivant l'une quelconque des revendications 1 à 3, **caractérisé en ce que** ledit pied (51) présente, vu en coupe transversale, une section qui est plus large à proximité de la tête (50) et qui est plus restreinte à distance de la tête (50).

5. Vitrage (1) suivant l'une quelconque des revendications 1 à 4, **caractérisé en ce que** ledit enjoliveur (4) comporte au moins une patte (45) qui est située sur un bord longitudinal dudit enjoliveur (4) et qui est rabattue au contact dudit pied (51).

6. Vitrage (1) suivant la revendication 5, **caractérisé en ce que** ledit enjoliveur (4) comporte en outre au moins une patte opposée qui est située sur un bord longitudinal opposé dudit enjoliveur (4) et qui est rabattue au contact dudit pied (51).

7. Vitrage (1) suivant l'une quelconque des revendications 1 à 6, **caractérisé en ce que** ledit noyau (5) présente une longueur égale à la longueur dudit enjoliveur (4) .

8. Vitrage (1) suivant l'une quelconque des revendications 1 à 7, **caractérisé en ce que** ladite portion de joint profilé (3), vue en coupe transversale, est en contact avec une face extérieure (22), une face intérieure (23) et un chant (21) dudit élément vitré (2) **et en ce que** ledit enjoliveur (4) est situé au moins en partie, au-dessus de ladite face extérieure (22) dudit élément vitré (2).

9. Vitrage (1) suivant l'une quelconque des revendications 1 à 7, **caractérisé en ce que** ledit pied (51) comporte au moins un trou transversal pour le passage de la matière de ladite portion de joint profilé (3).

10. Procédé de fabrication d'un vitrage (1) de véhicule, et notamment un vitrage (1) suivant l'une quelconque des revendications 1 à 9, ledit vitrage comprenant un élément vitré (2), au moins une portion de joint profilé (3), au moins un enjoliveur (4) présentant une forme allongée qui s'étend selon un bord dudit élément vitré (2) et présentant une face extérieure (42) visible depuis l'extérieur du véhicule et une face intérieure (43) située à l'opposé de ladite face extérieure (42), ainsi qu'un noyau (5), présentant une forme allongée et présentant en coupe transversale une tête (50) et un pied (51), est positionné sous ledit enjoliveur (4) avec au moins une partie de ladite tête (50) au contact de ladite face intérieure (43) de l'enjoliveur (4) et ledit pied (51) qui fait saillie sous ledit enjoliveur (4) avec au moins une partie dudit pied (51) qui n'est pas au contact avec ladite face intérieure (43) de l'enjoliveur (4),
**caractérisé en ce que** ladite portion de joint profilé (3) est fabriquée par moulage d'une matière plastique sur ledit élément vitré (2), sur ledit pied (51) et sur une partie de ladite face extérieure (42) de l'enjoliveur (4) avec ladite portion de joint profilé (3), vue en coupe transversale, qui est en contact avec ledit élément vitré (2), ledit pied (51) et une partie de ladite face extérieure (42) de l'enjoliveur (4).

11. Procédé suivant la revendication 10, **caractérisé en ce que** ledit noyau (5) adhère soit directement, soit par l'intermédiaire d'une colle, avec ladite matière plastique de ladite portion de joint profilé (3) et/ou ledit pied (51) présente, sur au moins une partie d'un contour, au moins une rainure longitudinale (52).

12. Procédé suivant la revendication 10 ou 11, **caractérisé en ce que** ledit enjoliveur (4) comporte au moins une patte (45) qui est située sur un bord longitudinal dudit enjoliveur (4) et qui est rabattue au contact dudit pied (51) avant le moulage de ladite portion de joint profilé (3).

13. Procédé suivant la revendication 12, **caractérisé en ce que** ledit enjoliveur (4) comporte en outre au moins une patte opposée qui est située sur un bord longitudinal opposé dudit enjoliveur (4) et qui est rabattue au contact dudit pied (51) avant le moulage de ladite portion de joint profilé (3).

## Patentansprüche

1. Fahrzeugfenster (1), wobei das Fenster ein verglastes Element (2), mindestens einen Dichtungsprofilabschnitt (3), mindestens eine Kappe (4), die eine längliche Form aufweist, die sich entlang eines Rands des verglasten Elements (2) erstreckt und eine Außenfläche (42) aufweist, die von außerhalb des Fahrzeugs sichtbar ist, und eine Innenfläche (43), die der Außenfläche (42) entgegengesetzt liegt, sowie einen Kern (5) umfasst, der eine längliche Form aufweist und im Querschnitt einen Kopf (50) und einen Fuß (51) aufweist, wobei der Kern (5) unter der Kappe (4) liegt, mit mindestens einem Teil des Kopfs (50) in Kontakt mit der Innenfläche (43) der Kappe (4) und dem Fuß (51), der unter der Kappe (4) vorragt, mit mindestens einem Teil des Fußes (51), der nicht mit der Innenfläche (43) der Kappe (4) in Kontakt steht, wobei der Dichtungsprofilabschnitt (3) im Querschnitt gesehen mit dem verglasten Element (2), dem Fuß (51) und einem Teil der Außenfläche (42) der Kappe (4) in Kontakt steht, **dadurch gekennzeichnet, dass** der Dichtungsprofilabschnitt (3) durch Formen eines Kunststoffmaterials auf dem verglasten Element (2), auf dem Fuß (51) und auf einem Teil der Außenfläche (42) der Kappe (4) hergestellt ist.

2. Fenster (1) nach Anspruch 1, **dadurch gekennzeichnet, dass** der Kern (5) entweder direkt oder über einen Klebstoff haftet, wobei der Dichtungsprofilabschnitt (3) und/oder der Fuß (51) auf mindestens einem Teil einer Kontur mindestens eine Längsnut (52) aufweist.

3. Fenster (1) nach Anspruch 1 oder 2, **dadurch gekennzeichnet, dass** der Dichtungsprofilabschnitt (3) an der Außenfläche (32) eine Vertiefung (35) mit einer Form aufweist, die zu einem Umfang des Fußes (51) komplementär ist.

4. Fenster (1) nach einem der Ansprüche 1 bis 3, **dadurch gekennzeichnet, dass** der Fuß (51) im Querschnitt gesehen einen Abschnitt aufweist, der in der Nähe des Kopfs (50) breiter und in einem Abstand vom Kopf (50) eingeschränkter ist.

5. Fenster (1) nach einem der Ansprüche 1 bis 4, **dadurch gekennzeichnet, dass** die Kappe (4) mindestens eine Pratze (45) umfasst, die auf einem Längsrand der Kappe (4) liegt, und die in Kontakt mit dem Fuß (51) umgeklappt ist.

6. Fenster (1) nach Anspruch 5, **dadurch gekennzeichnet, dass** die Kappe (4) außerdem mindestens eine entgegengesetzte Pratze umfasst, die auf einem Längsrand der Kappe (4) liegt, und die in Kontakt mit dem Fuß (51) umgeklappt ist.

7. Fenster (1) nach einem der Ansprüche 1 bis 6, **dadurch gekennzeichnet, dass** der Kern (5) eine Länge aufweist, die gleich der Länge der Kappe (4) ist.

8. Fenster (1) nach einem der Ansprüche 1 bis 7, **dadurch gekennzeichnet, dass** der Dichtungsprofilabschnitt (3) im Querschnitt gesehen mit einer Außenfläche (22), einer Innenfläche (23) und einer Kante (21) des verglasten Elements (2) in Kontakt steht, und dass die Kappe (4) mindestens teilweise über der Außenfläche (22) des verglasten Elements (2) liegt.

9. Fenster (1) nach einem der Ansprüche 1 bis 7, **dadurch gekennzeichnet, dass** der Fuß (51) mindestens ein Querloch für die Passage des Materials des Dichtungsprofilabschnitts (3) umfasst.

10. Verfahren zur Herstellung eines Fahrzeugfensters (1) und insbesondere eines Fensters (1) nach einem der Ansprüche 1 bis 9, wobei das Fenster ein verglastes Element (2), mindestens einen Dichtungsprofilabschnitt (3),mindestens eine Kappe (4), die eine längliche Form aufweist, die sich entlang eines Rands des verglasten Elements (2) erstreckt und eine Außenfläche (42) aufweist, die von außerhalb des Fahrzeugs sichtbar ist, und eine Innenfläche (43), die der Außenfläche (42) entgegengesetzt liegt, sowie einen Kern (5) umfasst, der eine längliche Form aufweist und im Querschnitt einen Kopf (50) und einen Fuß (51) aufweist, unter der Kappe (4) positioniert ist, mit mindestens einem Teil des Kopfs (50) in Kontakt mit der Innenfläche (43) der Kappe (4) und dem Fuß (51), der unter der Kappe (4) mit mindestens einem Teil des Fußes (51) vorragt, der nicht mit der Innenfläche (43) der Kappe (4) in Kontakt steht,
**dadurch gekennzeichnet, dass** der Dichtungsprofilabschnitt (3) durch Formen eines Kunststoffmaterials auf dem verglasten Element (2), auf dem Fuß (51) und auf einem Teil der Außenfläche (42) der Kappe (4) hergestellt ist, mit dem Dichtungsprofilabschnitt (3) im Querschnitt gesehen, der mit dem verglasten Element (2), dem Fuß (51) und einem Teil der Außenfläche (42) der Kappe (4) in Kontakt steht.

11. Verfahren nach Anspruch 10, **dadurch gekennzeichnet, dass** der Kern (5) entweder direkt oder über einen Klebstoff haftet, wobei das Kunststoffmaterial des Dichtungsprofilabschnitts (3) und/oder der Fuß (51) auf mindestens einem Teil einer Kontur mindestens eine Längsnut (52) aufweist.

12. Verfahren nach Anspruch 10 oder 11, **dadurch gekennzeichnet, dass** die Kappe (4) mindestens eine Pratze (45) umfasst, die auf einem Längsrand der Kappe (4) liegt, und die in Kontakt mit dem Fuß (51) vor dem Formen des Dichtungsprofilabschnitts (3) umgeklappt wird.

13. Verfahren nach Anspruch 12, **dadurch gekennzeichnet, dass** die Kappe (4) außerdem mindestens eine entgegengesetzte Pratze umfasst, die auf einem entgegengesetzten Längsrand der Kappe (4) liegt, und die in Kontakt mit dem Fuß (51) vor dem Formen des Dichtungsprofilabschnitts (3) umgeklappt wird.

## Claims

1. A vehicle glazing (1), said glazing comprising a glazed element (2), at least one portion of extruded seal (3), at least one trim (4) having an elongate form which extends along an edge of said glazed element (2) and having an outer face (42) visible from the outside of the vehicle and an inner face (43) situated opposite said outer face (42), and a core (5), having an elongate form and having, in cross section, a head (50) and a foot (51), said core (5) being situated under said trim (4) with at least a part of said head (50) in contact with said inner face (43) of the trim (4) and said foot (51) which protrudes under said trim (4) with at least a part of said foot (51) which is not in contact with said inner face (43) of the trim (4), said portion of extruded seal (3), seen in cross section, being in contact with said glazed element (2), said foot (51) and a part of said outer face (42) of the trim (4), **characterized in that** said portion of extruded seal (3) is manufactured by molding a plastic material on said glazed element (2), on said foot (51) and on a part of said outer face (42) of the trim (4).

2. The glazing (1) as claimed in claim 1, **characterized in that** said core (5) adheres either directly, or via a glue, with said portion of extruded seal (3) and/or said foot (51) has, on at least a part of a contour, at least one longitudinal groove (52).

3. The glazing (1) as claimed in claim 1 or 2, **characterized in that** said portion of extruded seal (3) has, on the outer face (32), a hollow (35) of a form complementing a perimeter of said foot (51).

4. The glazing (1) as claimed in any one of claims 1 to 3, **characterized in that** said foot (51) has, seen in cross section, a section which is wider in proximity to the head (50) and which is narrower away from the head (50).

5. The glazing (1) as claimed in any one of claims 1 to 4, **characterized in that** said trim (4) comprises at least one tab (45) which is situated on a longitudinal edge of said trim (4) and which is folded back into contact with said foot (51).

6. The glazing (1) as claimed in claim 5, **characterized in that** said trim (4) further comprises at least one opposite tab which is situated on an opposite longitudinal edge of said trim (4) and which is folded back into contact with said foot (51).

7. The glazing (1) as claimed in any one of claims 1 to 6, **characterized in that** said core (5) has a length equal to the length of said trim (4).

8. The glazing (1) as claimed in any one of claims 1 to 7, **characterized in that** said portion of extruded seal (3), seen in cross section, is in contact with an outer face (22), an inner face (23) and an edge face (21) of said glazed element (2) **and in that** said trim (4) is situated at least partly above said outer face (22) of said glazed element (2).

9. The glazing (1) as claimed in any one of claims 1 to 7, **characterized in that** said foot (51) comprises at least one transverse hole for the passage of the material of said portion of extruded seal (3).

10. A method for manufacturing a vehicle glazing (1), and in particular a glazing (1) as claimed in any one of claims 1 to 9, said glazing comprising a glazed element (2), at least one portion of extruded seal (3), at least one trim (4) having an elongate form which extends along an edge of said glazed element (2) and having an outer face (42) visible from the outside of the vehicle and an inner face (43) situated opposite said outer face (42), and a core (5), having an elongate form and having, in cross section, a head (50) and a foot (51), said core (5) being positioned under said trim (4) with at least a part of said head (50) in contact with said inner face (43) of the trim (4) and said foot (51) which protrudes under said trim (4) with at least a part of said foot (51) which is not in contact with said inner face (43) of the trim (4),
**characterized in that** said portion of extruded seal (3) is manufactured by molding a plastic material on said glazed element (2), on said foot (51) and on a part of said outer face (42) of the trim (4) with said portion of extruded seal (3), seen in cross section, which is in contact with said glazed element (2), said foot (51) and a part of said outer face (42) of the trim (4).

11. The method as claimed in claim 10, **characterized in that** said core (5) adheres either directly, or via a glue, with said plastic material of said portion of extruded seal (3) and/or said foot (51) has, over at least a part of a contour, at least one longitudinal groove (52).

12. The method as claimed in claim 10 or 11, **characterized in that** said trim (4) comprises at least one tab (45) which is situated on a longitudinal edge of said trim (4) and which is folded back into contact with said foot (51) before the molding of said portion of extruded seal (3).

13. The method as claimed in claim 12, **characterized in that** said trim (4) further comprises at least one opposite tab which is situated on an opposite longitudinal edge of said trim (4) and which is folded back into contact with said foot (51) before the molding of said portion of extruded seal (3).
